# EUROPEAN PATENT APPLICATION

(11) **EP 2 133 680 A2**
(43) Date of publication of application: **16.12.2009**
(21) Application number: 09162142.5
(22) Date of filing: 08.06.2009
(51) Int. Cl.: G01M 3/28

(54) **Device for detecting water leaks**

(30) Priority: 10.06.2008 IT BO20080365
(71) Applicant: Blueco S.r.l., 40033 Casalecchio di Reno, (BO) (IT)
(72) Inventor: Lamberti, Alberto, 40137, BOLOGNA (IT); Guerrero, Massimo, 40137, BOLOGNA (IT)
(74) Representative: Modiano, Micaela Nadia

(57) **Abstract**

A device (1) for detecting water leaks, which comprises an inlet (A) and an outlet (B) and can be installed along a main duct (2); the main duct (2) can be crossed by a flow of liquid. The detection device (1) comprises at least one bypass flowmeter (3), in order to measure the flow rate along at least one bypass duct (4) arranged in parallel to the main duct (2). Along the main duct (2) there are flow control means, for diverting the flow toward the bypass duct (4); the flow control means can be deactivated automatically when a predefined value of difference in pressure between the inlet (A) and the outlet (B) is exceeded.

## Description

The present invention relates to a device for detecting water leaks.

The installation of various types of flowmeter in the piping of aqueducts and other water distribution systems, in order to monitor the flow rate of the fluid that flows through the pipes, is currently widespread.

With particular reference to aqueducts or similar water networks, the flowmeter, according to different operating principles and measurement techniques, is capable of detecting the flow rate of water that passes through the duct with which it is associated, in order to define the consumption of the users arranged downstream of the instrument.

Since they are therefore installed for this purpose, such measurement instruments are sized and calibrated to detect flow rates that can vary within a range that is defined on the basis of expected consumption, which depends on the nature and number of the users arranged downstream of the duct to be monitored.

However, this constructive solution is not free from drawbacks.

Water distribution networks are in fact subject to malfunctions, due both to the natural aging of pipes and systems and due to malfunctions of various kinds.

These malfunctions often cause, along the ducts, water leaks that are small with respect to the consumption flow rates that normally affect the duct and for which, as already noted, the measurement instruments are calibrated.

This leads to poor accuracy, if not total insensitivity, in detecting and measuring such leaks, with several negative consequences.

First of all, due to failure to detect the leak, its persistence over time causes substantial economic damage borne by users and is a source of the potential onset of damage to dwellings and other neighboring buildings affected by the damaged water network.

In addition, water is now increasingly seen as a nonrenewable resource of primary importance, whose availability, especially in certain regions, is extremely limited; in view of these ethical considerations, the waste of water associated with such leaks is highly intolerable.

The aim of the present invention is to solve the above-mentioned drawbacks, by providing a detection device that allows correct identification and management of leaks, even small ones, within a duct.

Within this aim, an object of the invention is to provide a detection device that ensures high reliability in operation.

Another object of the invention is to provide a detection device that can be obtained easily starting from commonly commercially available elements and materials.

Another object of the invention is to provide a detection device that has a low cost and is safe in application.

This aim and these and other objects which will become better apparent hereinafter are achieved by a device for detecting water leaks, comprising an inlet and an outlet and being installable along a main duct that can be crossed by a flow of liquid, characterized in that it comprises at least one bypass flowmeter, in order to measure the flow rate along at least one bypass duct arranged in parallel to said main duct, along said main duct there being flow control means, for diverting said flow toward said bypass duct, said flow control means being deactivatable automatically when a predefined value of difference in pressure between said inlet and said outlet is exceeded.

Further characteristics and advantages of the invention will become better apparent from the following detailed description of a preferred but not exclusive embodiment of the detection device according to the invention, illustrated by way of non-limiting example in the accompanying drawings, wherein:
Figure 1 is an axial sectional view of a detection device according to the invention, with the flow control means arranged in a first operating configuration;
Figure 2 is an axial sectional view of the detection device according to the invention, with the flow control means arranged in a second operating configuration;

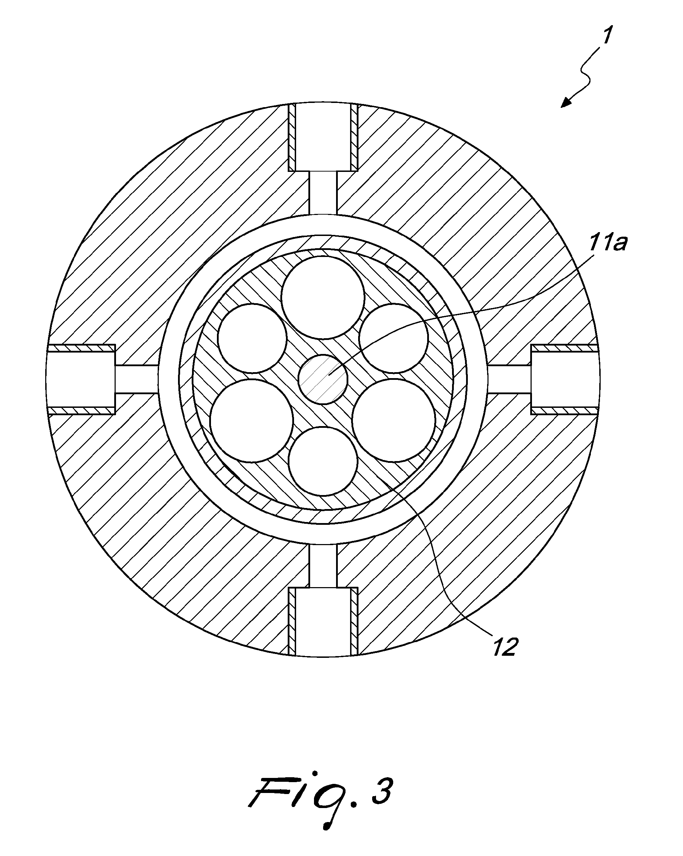

Figure 3 is a sectional view of Figure 1, taken along the line III-III.

With reference to the figures, a detection device according to the invention, generally designated by the reference numeral 1, comprises an inlet A and an outlet B and can be installed along a main duct 2 that is crossed by a flow of liquid.

According to a preferred application of the detection device 1, to which constant reference shall be made hereinafter, the main duct 2 is part of a water system for the distribution of water, which therefore constitutes the above cited liquid, to one or more users constituted by buildings for residential and/or commercial use.

Installation of the detection device 1 according to the invention in different types of main duct 2, be they crossed by flows of water or by flows of other liquids, is in any case not excluded; such constructive solutions are therefore within the scope of the protection of the appended claims.

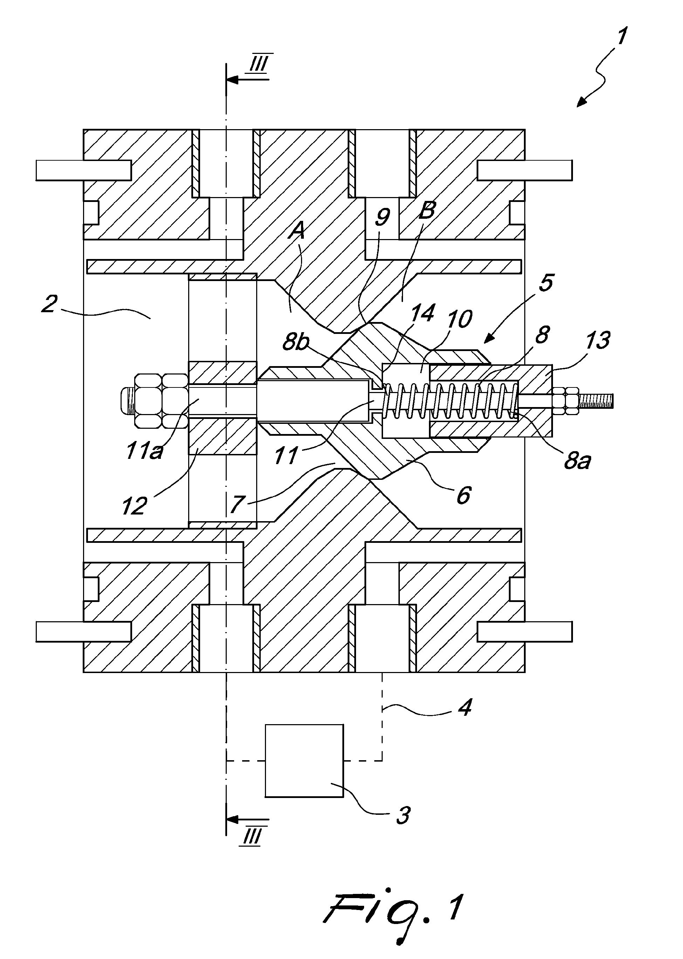

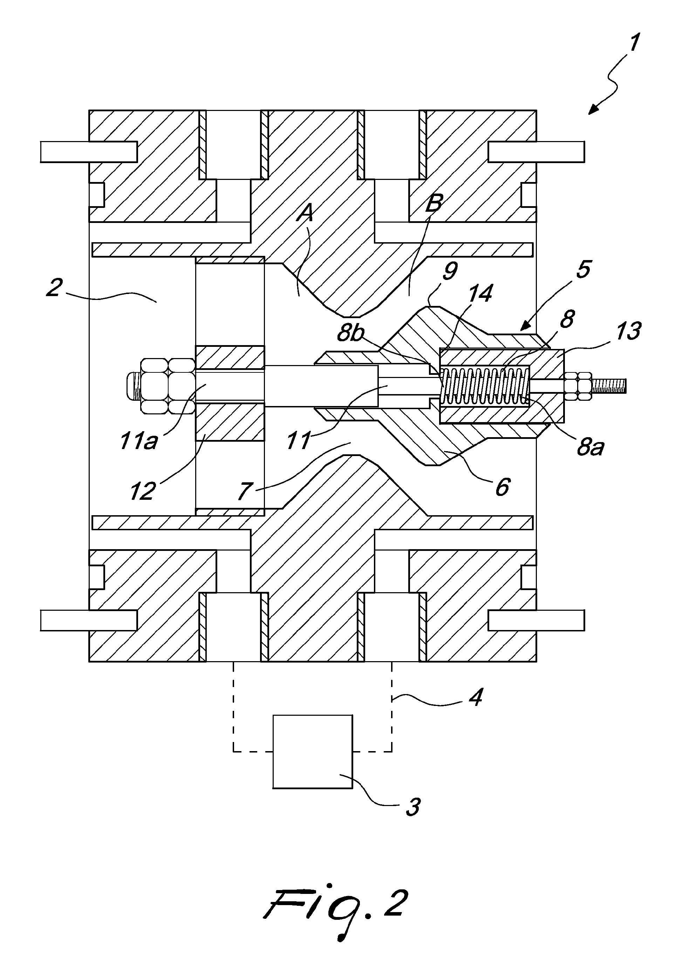

According to the invention, the detection device 1 comprises at least one bypass flowmeter 3, which is capable of measuring the flow rate of water that passes through a bypass duct 4 (shown substantially with a broken line in Figures 1 and 2), arranged in parallel to the main duct 2.

Along the main duct 2 there are flow control means, in order to divert such flow toward the bypass duct 4; the exceeding, by the flow, of a predefined value of difference in pressure between the inlet A and the outlet B causes the automatic deactivation of such flow control means, thus allowing the passage of the flow along the main duct 2.

In practice, as will become better apparent hereinafter, a consequence of this is that up to a predefined flow rate value the behavior of the detection device 1 (which is in the configuration shown in Figure 1) is such as to divert the flow to the bypass duct 4, which leads back to the main duct 2 downstream of the detection device 1 and of its outlet B, after the bypass flowmeter 3 has performed a measurement of the flow rate.

When such predefined value is exceeded, the flow control means are deactivated automatically (with the detection device 1 moving into the configuration shown in Figure 2) and the flow, or almost all of it, travels along the main duct 2, affecting only to a minimum extent the bypass duct 4.

Along the main duct 2, downstream of the detection device 1, there is typically a main flowmeter, which is provided according to various types and is capable of measuring correctly flow rates on the order of magnitude of the ones expected on the basis of the users for which the water is intended.

Advantageously, the bypass flowmeter 3 has a sensitivity that is higher than the sensitivity of the main flowmeter: the minimum flow rate value that can be detected correctly by the bypass flowmeter 3 is, in other words, lower than the minimum flow rate value that can be detected correctly by the main flowmeter.

More particularly, the choice of the bypass flowmeter 3 to be installed can be oriented toward an instrument that is adapted to measure flow rates one or more orders of magnitude lower than the flow rates that pass within the main duct 2, in order to meet the demand of users, and for the correct measurement of which the main flowmeter is preset.

In this manner, the bypass flowmeter 3 is capable of detecting and measuring precisely and accurately the small or very small flow rates that might pass within the main duct 2 as a consequence of a fault; such small flow rates in fact are unable to deactivate the flow control means (having chosen appropriately the predefined value suitable for their deactivation) and are therefore diverted along the bypass duct 4.

This allows to achieve the preset goal and to obtain accurate and precise detection of the small flow rates generated by a fault along the distribution network that involves the main duct 2.

According to a first possible embodiment, the bypass flowmeter 3 is of the type of speed measurement devices, which in turn are available according to various operating principles.

These apparatuses employ the known relation of constancy of flow rate to provide a measurement of the flow rate by means of a measurement of the speed of the fluid, the passage section being known.

According to an alternative embodiment, the bypass flowmeter 3 is of the type of direct flow rate measurement devices; this type of apparatus, too, can be provided according to various operating principles, some of which are particularly suitable for measuring low flow rate values.

For example, the bypass flowmeter 3 might be a volumetric flow rate measurement device of the turbine type, which is cited merely by way of non-limiting illustration of the application of the invention.

Conveniently, the flow control means comprise at least one valve 5, which is normally arranged in a configuration for closing the main duct 2. The valve 5 can move automatically from the closure configuration to a configuration for opening the main duct 2 when the flow exceeds the predefined value of pressure difference between the inlet A and the outlet B (and vice versa).

In particular, the valve 5 comprises a flow control element 6, which is normally arranged so as to close a passage port 7, for the flow of liquid, which is formed along the main duct 2.

The flow control element 6 can move automatically when the flow exceeds the predefined value of difference in pressure between the inlet A and the outlet B, in order to cause the opening of the passage port 7; passage through the port 7 is allowed as long as the pressure difference value remains higher than the preset value; if a reduction below this threshold subsequently occurs, the flow control element 6 closes the passage port 7, diverting the flow toward the bypass duct 4.

More particularly, according to one possible embodiment, the valve 5 comprises a spring 8, which acts on the flow control element 6: in the closure configuration, the flow control element 6 is thus forced elastically to close the passage port 7 (and therefore is arranged as in Figure 1).

Vice versa, a pressure at the inlet A that is higher than the pressure at the outlet B for at least such predefined value is capable of overcoming the elastic reaction of the spring 8, which is compressed, and of thus causing the movement of the flow control element 6 and the opening of the passage port 7 (and the flow control element 6 assumes the arrangement of Figure 2).

In order to allow the closure of the passage port 7, the flow control element 6, which is substantially axially symmetrical, comprises an expansion 9 that is formed in an annular arrangement along its outer surface: upon transition from the closure configuration to the open configuration, the flow control element 6 performs a translational motion toward the inlet A and the expansion 9 abuts against the passage port 7, closing it.

In order to ensure correct movement of the flow control element 6, such flow control element is hollow internally, so as to define a seat 10 that is adapted to accommodate a fixed guiding stem 11. The locking and centering of the guiding stem 11 is ensured by a bush 12, which is keyed onto an end portion 11 a of the guiding stem 11 and in turn is coupled rigidly to the internal surfaces of the main duct 2, substantially at the inlet A.

The spring 8 is then wound around the guiding stem 11, substantially on the opposite side with respect to the bush 12, and is fixed, at a first end 8a thereof, to a sleeve 13 that is jointly mounted on the stem 11 coaxially.

The elastic action of the spring 8 on the flow control element 6 is applied by means of a second end 8b thereof, which lies opposite the first one and abuts against a shoulder 14 that is formed along the internal walls of the seat 10; by way of the action of the spring 8, the flow control element 6 can thus slide along the outer walls of the sleeve 13 and of the guiding stem 11 until the port 7 is closed.

According to a different embodiment, the detection device 1 comprises a first pressure transducer and a second pressure transducer, which are capable of detecting the value of the pressure along the main duct 2 respectively at the inlet A and at the outlet B.

The first pressure transducer and the second pressure transducer are functionally associated with a control and management unit, which is therefore capable of picking up their output signals and of driving, on the basis of such signals, an actuator that is adapted to move the flow control element 6 for transition from the closed configuration to the open configuration when the predefined pressure difference value is exceeded, and vice versa.

The operation of the detection device according to the invention is as follows.

If the users connected to the main duct 2 consume no water, any difference in pressure between the inlet A and the outlet B is unable to overcome the elastic reaction of the spring 8, which thus forces elastically the flow control element 6 on the passage port 7, closing the main duct 2.

When water is requested, the difference in pressure increases up to a value that exceeds the predefined value and causes the sliding of the flow control element 6 and the consequent opening of the passage port 7: the water can thus flow along the main duct 2 (optionally, a minimal amount may also flow along the bypass duct 4, which has a much smaller cross-section) and the corresponding flow rate value can be measured by the main flowmeter arranged downstream of the detection device 1 according to the invention.

If instead the difference in pressure between the inlet A and the outlet B is due to a deterioration or fault of the water network affected by the main duct 2 and has a smaller value than that needed to open the port 7, any flow of water generated in any way by this malfunction is directed toward the bypass duct 4.

Such water flow therefore has a reduced flow rate, which is suitable for detection by means of the bypass flowmeter 3 (arranged along the bypass duct 4), which is chosen indeed of the type suitable for measuring small flow rates, differently from the main flowmeter, which has the task of monitoring the flow rates associated with the consumption of users in normal operating conditions.

In practice it has been found that the detection device according to the invention fully achieves the intended aim and objects, since resorting to flow control means arranged along the main duct allows to divert the flow toward the bypass duct, along which the bypass flowmeter is capable of identifying and measuring correctly the flow rate value.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

The disclosures in Italian Patent Application No. BO2008A000365 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for detecting water leaks, comprising an inlet (A) and an outlet (B) and being installable along a main duct (2) that can be crossed by a flow of liquid, **characterized in that** it comprises at least one bypass flowmeter (3), in order to measure the flow rate along at least one bypass duct (4) arranged in parallel to said main duct (2), along said main duct (2) there being flow control means, for diverting said flow toward said bypass duct (4), said flow control means being deactivatable automatically when a predefined value of difference in pressure between said inlet (A) and said outlet (B) is exceeded.

2. The detection device according to claim 1, **characterized in that** said bypass flowmeter (3) has a higher sensitivity than a main flowmeter, arranged downstream of said detection device (1), to measure the flow rate along said main duct (2), the minimum flow rate value that can be detected correctly by said bypass flowmeter (3) being lower than the minimum flow rate value that can be detected correctly by the main flowmeter.

3. The detection device according to claim 1, **characterized in that** said bypass flowmeter (3) is of the type of speed measurement devices.

4. The detection device according to claim 1, **characterized in that** said bypass flowmeter (3) is of the type of direct flow rate measurement devices.

5. The detection device according to claim 4, **characterized in that** said direct flow rate measurement device is a volumetric measurement device of the turbine type.

6. The detection device according to claim 1, **characterized in that** said flow control means comprise at least one valve (5), which is normally arranged in the configuration for closing said main duct (2), said valve (5) being movable automatically from a closed configuration to an open configuration of the main duct (2) when the predefined value of difference in pressure between said inlet (A) and said outlet (B) is exceeded, and vice versa.

7. The detection device according to claim 6, **characterized in that** said valve (5) comprises a flow control element (6), which is normally arranged so as to close a passage port (7), for the flow of liquid, which is formed along said main duct (2), said flow control element (6) being movable automatically, in order to open said port (7), when the predefined value of difference in pressure between said inlet (A) and said outlet (B) is exceeded, and vice versa.

8. The detection device according to claim 7, **characterized in that** said valve (5) comprises a spring (8) that acts on said flow control element (6), in said closure configuration said flow control element (6) being forced elastically to close said passage port (7), a pressure at said inlet (A) that is higher than the pressure at said outlet (B) by at least the predefined pressure difference value being adapted to overcome the elastic reaction of said spring (8) in order to move said flow control element (6) and open said passage port (7), and vice versa.

9. The detection device according to claim 8, **characterized in that** said flow control element (6) has a substantially axially symmetrical shape and is hollow internally so as to form a seat (10) for accommodating a fixed guiding stem (11), said spring (8) winding around said stem (11) and being fixed at a first end (8a) to a sleeve (13), which is jointly and coaxially mounted on said stem (11), a second end (8b) of said spring (8) abutting elastically against a shoulder (14) formed along the internal walls of said seat (10).

10. The detection device according to claim 7, **characterized in that** it comprises a first pressure transducer and a second pressure transducer, in order to detect the pressure value respectively in said inlet (A) and in said outlet (B), said first pressure transducer and said second pressure transducer being functionally associated with a control and management unit of an actuator that is suitable for the movement of said flow control element (6), for transition from said closed configuration to said open configuration when the predefined pressure difference value is exceeded, and vice versa.
